# EUROPEAN PATENT SPECIFICATION

(11) **EP 0 281 352 B1**
(45) Date of publication and mention of the grant of the patent: **30.11.1994**
(21) Application number: 88301752.7
(22) Date of filing: 01.03.1988
(51) Int. Cl.: H01M 4/40, H01M 4/02, H01M 6/14, H01M 6/18, H01M 10/40

(54) **Lithium-lithium nitride anode**
Lithium-Lithiumnitrid-Anode
Anode en lithium-nitrure de lithium

(30) Priority: 04.03.1987 CA 531168
(43) Date of publication of application: 07.09.1988
(73) Proprietor: THE NEW BRUNSWICK TELEPHONE COMPANY LIMITED, Saint John New Brunswick E2L 4K2 (CA)
(72) Inventor: Desjardins, David C., Frederiction New Brunswick E3B 5W9 (CA); Sharifian, Hossein, Austin Texas 78741 (US); Maclean, Gregory K., Frederiction New Brunswick E3B 4C2 (CA)
(74) Representative: Arthur, Bryan Edward

(56) References cited:
- EP-A- 0 130 049
- GB-A- 2 024 500
- PATENT ABSTRACTS OF JAPAN, vol. 9, no. 102 (E-312)[1825], 4th May 1985; & JP-A-59 228 360 (MATSUSHITA DENKI SANGYO K.K.) 21-12-1984
- PATENT ABSTRACTS OF JAPAN, vol. 4, no. 152 (E-31)[634], 24th October 1980, page 115 E 31; & JP-A-55 104 078 (DAINI SEIKOSHA K.K.) 09-08-1980
- IDEM
- PATENT ABSTRACTS OF JAPAN, vol. 8, no. 272 (E-284)[1709], 13th December 1984; & JP-A-59 143 268 (HITACHI MAXELL K.K.) 16-08-1984
- PATENT ABSTRACTS OF JAPAN, vol. 9, no. 140 (E-321)[1863], 14th June 1985; & JP-A-60 23 958 (HITACHI MAXELL K.K.) 06-02-1985
- PATENT ABSTRACTS OF JAPAN, vol. 7, no. 132 (E-180)[1277], 9th June 1983; & JP-A-58 48 354 (HITACHI MAXELL K.K.) 22-03-1983

## Description

### Background of the Invention

The invention relates to the use of a mixture of lithium and nitrogen as anode material in rechargeable high energy density batteries.

The problems associated with the use of pure lithium metal anodes in electrochemical systems, and, in particular, in rechargeable cells have been well documented in the scientific and technical literature (see, for example, U.S. Patents 4,550,064, 4,499,161, 4,118,550, 4,071,664, 4,086,403). The fundamental problem is the thermodynamic and kinetic instability of lithium towards cell materials and the electrolyte especially at the anode/electrolyte interface. In electrochemical cells, this results in corrosion/passivation of the lithium electrode. Thus, attempts to recycle lithium result in dendritic growth, formation of poorly adherent high surface area deposits of lithium metal on charging and slow chemical decomposition of the electrolyte. Ultimately, cell failure occurs due to cell shorting, depletion and/or isolation of the anode and anode passivation from electrolyte breakdown procucts. Short term solutions to the above problems have been to use excess lithium metal and/or conductive/protective films. Another approach has been to use composite electrodes like lithium-aluminum alloy. In such cases, an immobile host material promotes a uniform distribution of lithium having reduced chemical activity. Lithium aluminum alloys have been extensively investigated in nonaqueous electrolyte systems. However, the electrode experiences large volume changes during deposition/stripping associated with phase transformations. Such electrodes, on extensive recycling, exhibit severe mechanical instability. Other disadvantages associated with the use of alloys include large voltage and capacity losses relative to pure lithium anodes.

### Summary of the Invention

It has been found that the above-mentioned problems with anodes made of lithium or lithium-aluminum alloy can be reduced or avoided by the use of anodes made of mixture of lithium and nitrogen. This invention is therefore primarily directed to lithium-based electrochemical cells having a new anode material which comprises a solid state mixture of lithium metal and nitrogen wherein the nitrogen is in the form of lithium nitride. Anodes comprising the solid solution formed from this mixture, (said solution being sometimes referred to in this specification as "Li/Li₃N") are intended to be used to replace the lithium anodes in lithium-based electrochemical cells. The remaining elements of lithium-based electrochemical cells, such as the cathode, separator, and electrolyte, can be used without modification in electrochemical cells made according to this invention, having anodes of Li/Li₃N. Such elements have been extensively described in the lithium battery literature.

Mixtures of lithium and lithium nitride have been identified in the scientific literature (e.g. U.S. Patent 4,447,379 to Wagner) as intermediates in the preparation of a solid electrolyte and lithium nitride has been used as a solid ion conductor in solid state cells as reviewed by A. Rabenau (Solid State Ionics, 6 (1982) 277). Surface films of Li₃N on lithium foil anodes have also been investigated by Thevenin et al. (Lawrence Berkeley Lab., CA (USA), Jan 1986, Report No. LBL 20659).

The new anode material has reduced chemical/electrochemical activity towards electrolyte especially at the anode/electrolyte interface, can recycle lithium at very high efficiencies and exhibits no cell voltage losses. Li/Li₃N significantly reduces the rate of interaction between elemental lithium and electrolyte during charge/discharge cycling and in storage. Therefore, an improved lithium-based anode material formed of lithium and lithium nitride, employable with a suitable electrolyte, separator and cathode for use in a lithium rechargeable cell is contemplated.

Lithium nitride is known to have the highest Li+ ion conductivity of any inorganic lithium salt and has been extensively studied as a solid electrolyte in solid state cells. However, the relatively low decomposition potential of lithium nitride (E_{d}=0.44V) has limited its commercial use in solid state cells. By contrast, lithium nitride is thermodynamically stable to lithium metal and, in combination with lithium metal, forms a very stable anode material.

### Brief Description of the Drawings

Figure 1 is the polarization curve of Li/Li₃N (11 mole%N) in 1M LiAsF₆/2-MeTHF electrolyte at room temperature.

Figures 2 and 3 illustrate the activity of Li/Li₃N (11 mole%N) and pure lithium electrodes during storage time in 1M LiAsF₆/2-MeTHF based electrolyte and 1M LiAsF₆/THF electrolyte respectively at room temperature.

Figure 4 illustrates the exchange current of Li/Li₃N (11 mole%N) and pure lithium electrodes in LiAlCl₄/thionyl chloride electrolyte at room temperature.

Figure 5 illustrates the extent of passivation of pure lithium and Li/Li₃N (11 mole%N) during anodic step in a 1M LiAsF₆ dioxolane-based electrolyte at -20°C.

Figure 6 illustrates the cycling performance of lithium and Li/Li₃N electrodes (11 mole%N) in a 1M LiAsF₆/2-MeTHF electrolyte at room temperature.

### Detailed Description of the Preferred Embodiments

Anode material according to the invention can be prepared by melting lithium metal foil in a crucible in an argon-filled dry box, adding nitrogen in the form of lithium nitride powder, nitrogen gas or other suitable nitrogen-containing material to form a homogeneous material, and cooling the material to room temperature. The anode material so formed comprises a solid solution of lithium metal and lithium nitride. Whether nitrogen is added to liquid lithium in the form of lithium nitride, nitrogen gas, or any other nitrogen-containing substance that will release its nitrogen in molten lithium, it has been found that the nitrogen in the solution of mixture is in the form of lithium nitride. The exact composition of the Li/Li₃N material, is dependent on the process temperature and cooling rate. The temperature dependency is partially defined by the material's phase diagram (see PF. Adams et al. J. of the Less-Common Metals, 42 (1975) 1-11, 325-334).

In the specific case of the 11 mole%N Li/Li₃N mixture used for the data represented herein, approximately 2g Li₃N powder was slowly added to 2g of molten lithium metal in a nickel crucible at approximately 300°C. The material was stirred for several minutes until homogeneous and was then cooled to room temperature. The resulting anode material was compressed at about 4091 kg/cm² (9000 lb/cm²) into the desired shape.

The anode material can be rolled or extruded into a foil, which is considered a preferred form for use in electrochemical cells.

A 1.12 mole % nitrogen solid solution anode material was prepared by slowly dissolving 6.34g of Li₃N in 108.21g of pure molten lithium at a temperature of approximately 445°C. The molten solution was then poured into a mold having a large heat sink to permit rapid cooling. The material solidified almost immediately and the mold was transferred to an extruder for further processing.

In the anode material according to the present invention, the proportion of Li₃N in the mixture can be at any effective level according to the range of claim 1. At levels at which the proportion of N in the mixture varies from about 0.06 to 20 mole percent, Li and Li₃N form a solid solution at elevated temperatures, yielding a satisfactory, homogeneous anode material. Within this broad range, a narrower range of 1·12 to 10 mole percent N is considered preferable.

An electrochemical system that utilizes the Li/Li₃N anode includes a separator, an electrolyte, and a cathode.

Suitable separator materials include those commonly employed in lithium cells such as porous polypropylene and glass microfibre materials that are sufficiently porous and wettable by the appropriate electrolyte.

Suitable nonaqueous solvent systems for the electrolyte include all solvents normally employable in lithium cells with particular emphasis on aprotic ether or sulphur analogue systems, preferably dioxolanes, furans, glymes, methoxy methanes, glycol sulfites, sulfolanes, propylene carbonate and combinations thereof. Suitable lithium salts are selected based on their high solubility (e.g.=0.5M) and conductivity in the chosen solvent system but would include, more specifically, anions such as the perchlorates, sulfonates, acetates, borates, thiocyanates, closoboranes, hexafluoro or tetrafluoro metallates, halides, aluminates and derivatives thereof. It should be emphasized that normal lithium foil anode dependencies and/or constraints on the choice of an electrolyte (e.g. solute/solvent combinations) do not apply for systems employing the Li/Li₃N anode material. That is, a much wider choice of electrolyte(s) may be used. Some of these electrolytes show considerably improved performance characteristics relative to standard lithium anode materials.

Solid electrolytes such as lithium nitride, lithium iodide and lithium aluminum nitride, as well as polymeric ionic conductors, or combinations thereof, may also be used in the present invention.

The use of electrolytes based on inorganic solvents such as sulfur dioxide, thionyl chloride or sulfuryl chloride, with an appropriate conductive lithium salt, is also contemplated.

A suitable cathode includes any of those described in the technical and patent literature for lithium-based electrochemical systems. For example cathodes comprising a halogen or halide, a metal oxide, sulphides, selenides, oxyhalides, sulfur dioxide and carbon can be used. Cathodes having an active material comprising a chalcogen or chalcogenide compound of a transition metal are also suitable. The use of intercalation-type materials and the transition metal sulphides (e.g. TiS₂ or MoS₂) or oxides (e.g. V₆O₁₃), is preferred.

Anodes made according to the invention may be comprised solely or substantially solely of Li/Li₃N, or they may be comprised of composite materials, of which Li/Li₃N is one component. For example, anode compositions comprising plastic or elastomeric macromolecular material with ionic conduction, lithium alloys and carbon compounds are described in U.S. Patent 4,517,265 to Belanger et al. Similar anode compositions may be made according to the present invention which would include Li/Li₃N as a component.

Similarly, it is known to use alloys of lithium and aluminum as an anode material (e.g. U.S. Patent 4,002,492 to Rao). Anodes may be made according to the present invention using mixtures of Li/Li₃N and lithium-aluminum alloys.

The use of other lithium alloys as anode materials is also known in the art, and the use of mixtures of lithium nitride in conjunction with Lithium metal and one or more lithium alloys such as Li-Si, Li-Sn, Li-Fe, Li-Sb, Li-Bi, Li-B, Li-Pb, Li-As, etc. and other combinations thereof as anode materials is contemplated according to the present invention.

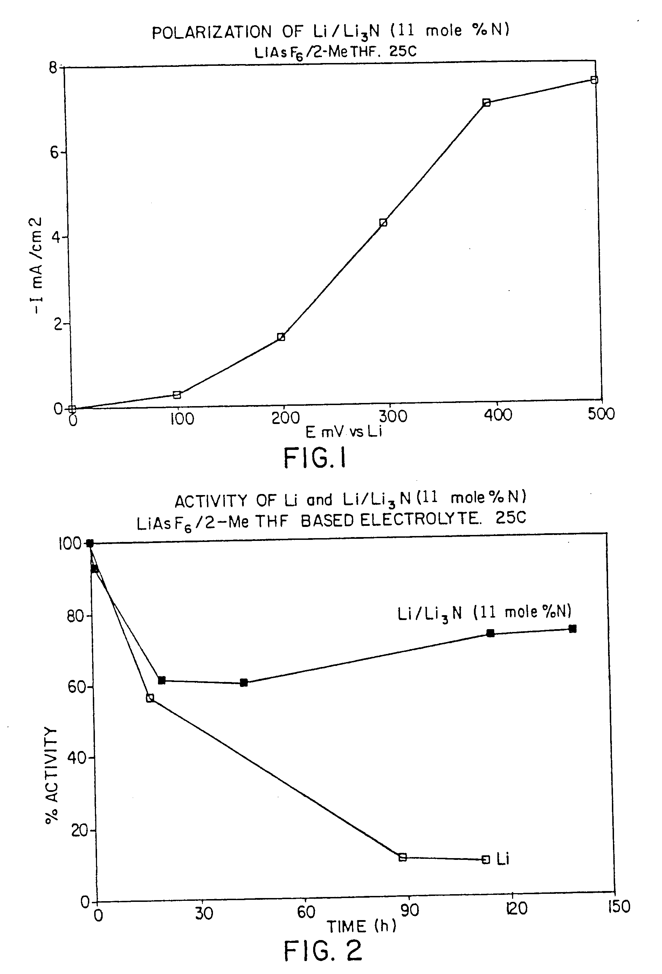

As shown in Figure 1 of the drawings, the polarization curve of Li/Li₃N at room temperature demonstrates that upon the anodic step the current rises to high values. Despite the relatively low decomposition potential of Li₃N, the cell utilizing Li/Li₃N can be discharged up to 7.0 mA/cm² in a majority of aprotic solvents commonly used in lithium rechargeable cells. The polarization curve also indicates that Li/Li₃N anodes cycled at low current densities will show only minor overpotentials. In these cases, the overpotentials are less than the decomposition potential of Li₃N.

Figure 2 demonstrates the relative activity of lithium metal and Li/Li₃N during storage time at room temperature. In general, the formation of insulating layers on the electrode during storage periods causes an associated reduction of its active surface. The evolution of the corresponding activity loss has been followed by measuring the ratio iₜ/iₒ (iₒ is the exchange current at initial time, iₜ is the exchange current after a specified time later) by means of AC impedance spectroscopy at the end of initial treatment (iₒ) and after a standing time (t) on open circuit (iₜ). The curves in Figure 2 show that the chemical stability of the lithium versus the electrolyte decreases severely with time, while Li/Li₃N shows an excellent stability versus solvent under similar experimental conditions.

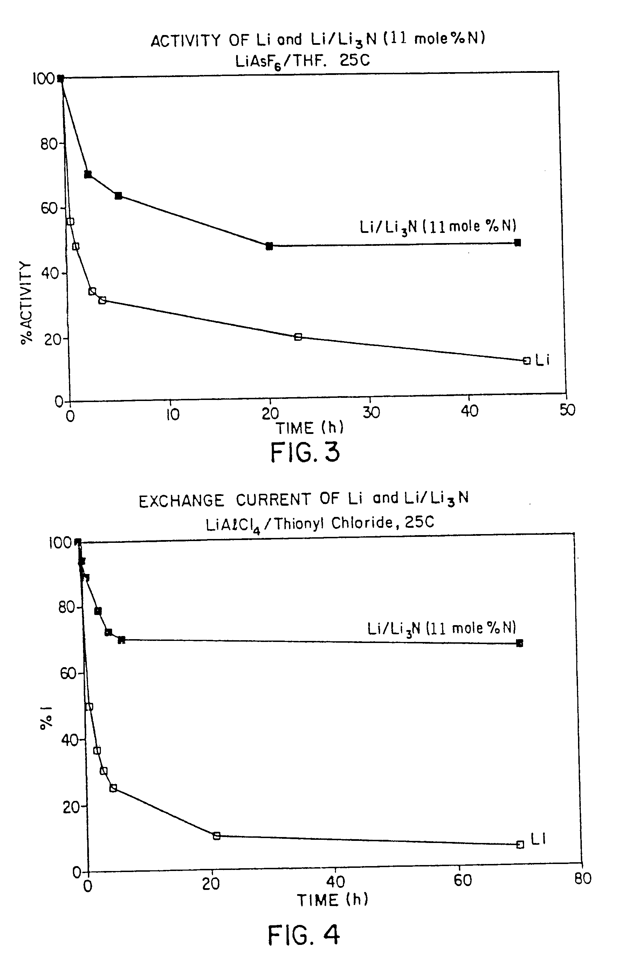

A similar experiment was carried out employing a relatively more reactive solvent such as tetrahydrofuran ("THF"). It is well known that THF is too reactive for use in secondary cells. Even very pure THF reacts rapidly with lithium and formation of a gel-like film. It is readily apparent from Figure 3 that the surface activity of Li/Li₃N decreases moderately during a 50 hour storage time at room temperature, while the surface of a pure lithium electrode became entirely inactive during the same period.

These physical phenomenon support the conclusion that Li/Li₃N offers a significantly longer shelf life, in which an immobile host material such as Li₃N promotes a uniform lithium distribution of reduced activity. This is particularly true for the lithium electrodes in primary cells where one constantly faces problems resulting from the presence of passivating layers at the surface of the lithium metal which limit the transport of the active materials to the interface. Moreover, excessive passivation of the pure lithium anode entails a long delay time for the attainment of a steady state cell voltage on initial discharge. All these problems can be alleviated markedly by employing a Li/Li₃N anode, where substantially reduced chemical activity is observed.

Moreover, cells employing Li/Li₃N anodes could be extremely important in present day primary cell technology. One of the most promising of these is the lithium thionyl chloride cell, in which LiAlCl₄ is added to the liquid thionyl chloride in order to increase the conductivity and facilitate Li+ ion transport. The high stability of lithium in LiAlCl₄/SOCl₂ solution is due to a protecting surface film of LiCl which is formed as the electrode makes contact with the electrolyte. While the film makes it possible to construct a battery from a thermodynamically unstable combination such as Li in SOCl₂, an attendent voltage delay must be overcome in order to have a practical system.

In this connection, Li/Li₃N electrodes have been studied in thionyl chloride and sulfur dioxide solutions. Figure 4 depicts the percentage of the exchange current of the cell employing Li and Li/Li₃N (11 mole%N) in thionyl chloride/LiAlCl₄ (1.6M) during storage at room temperature. The magnitude of exchange current is indicative of the surface activity of the electrode which is in turn directly related to the thickness of the passive film formed on the electrode surface. It is readily apparent in Figure 4 that the exchange current of the lithium electrode decreases with increasing storage time, while the cell utilizing a Li/Li₃N electrode exhibits a greater exchange current under similar experimental conditions.

The LiCl film which grows continuously on lithium causes an initial voltage delay, as has been reported previously. It is further believed that the initial voltage delay of the Li/SOCl₂ cell depends on the effective LiCl film thickness growth rate. Thus, the initial voltage delay of a cell utilizing a Li/Li₃N anode would be significantly smaller than the cell utilizing a Li metal anode. This is particularly true for longer storage times, where the Li cell suffers significantly from the continuous growth of LiCl film on the lithium with a corresponding gradual increase in the cell's initial voltage delay.

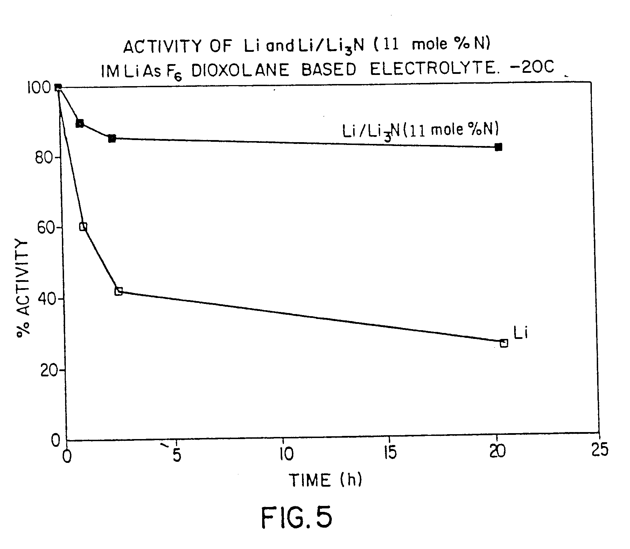

Figure 5 illustrates the activity of lithium metal and Li/Li₃N during anodic stripping at 1.0 mA/cm² at -20°C. The formation of insulating layers at the lithium metal surface is readily apparent in Figure 5. These layers have been attributed to solvent polymerization initiated by LiAsF₆ decomposition products. Deterioration of the electrochemical properties of the metal/electrolyte interface due to the formation of passivating layers could be ascribed to a significant ohmic drop overpotential resulted from lower conductivity as well as higher viscosity of the electrolyte at lower temperatures. Consequently, this limits the amount of lithium metal in each cycle. It is further evident from Figure 5 that the extent of passivation of Li/Li₃N is not as severe as that for lithium electrodes at -20°C during an anodic stripping at 1.0 mA/cm², despite the greater ohmic drop of the cell utilizing Li/Li₃N.

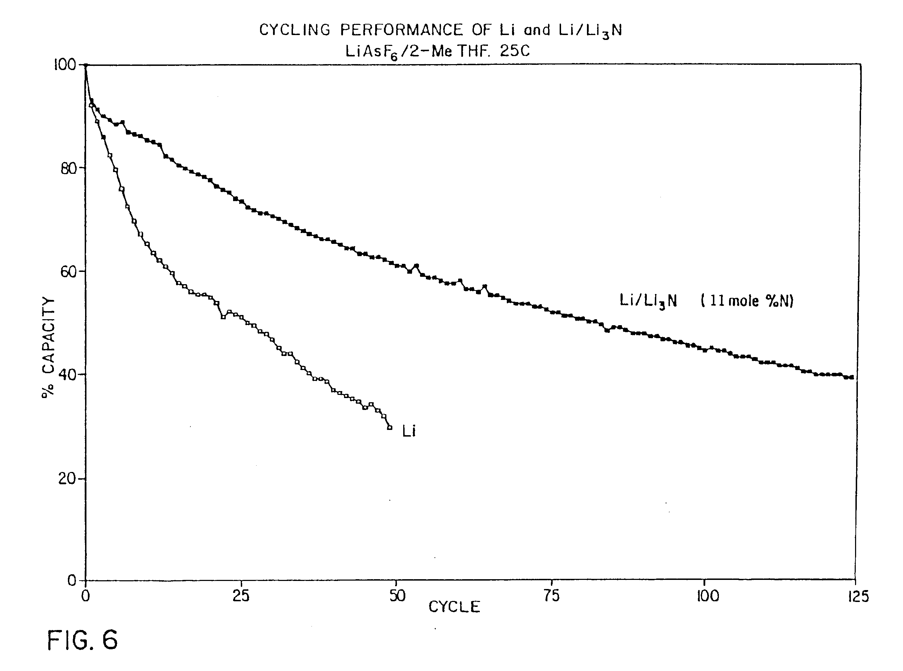

Figure 6 shows the discharge capacity of lithium and Li/Li₃N as a function of cycle number at room temperature. The cathode was made from an intercalation material, namely TiS₂. The cell was completed with a glass fiber separator soaked with 1.0M LiAsF₆ in 2-methyltetrahydrofuran. The results of the cycling experiment demonstrate the higher theoretical capacity of the Li/Li₃N electrode relative to pure lithium anodes after cycling. In further testing, the cell utilizing a pure lithium anode completed only 50 cycles at 30% of its theoretical capacity, while the cell utilizing a Li/Li₃N anode completed 125 cycles at 40% of its theoretical capacity.

From the above data, it may be appreciated that the present invention provides a viable solution to numerous problems associated with the use of pure lithium metal anodes in lithium rechargeable cells. A suggested explanation for the superior properties of Li/Li₃N as an anode material relates to the formation of micropores at the surface of the electrode during discharge processing. The porous Li/Li₃N electrode formed on discharge may act as a three dimensional electrode, thereby reducing significantly the local current density and eliminating the mass redistribution of lithium on extending cycling. Furthermore, morphological studies performed on Li/Li₃N by means of a scanning electron microscope have shown that anodic polarization effectively cleans the anode surface. The microporous struture of the substrate was clearly revealed after the electrode surface was anodically polarized at about +50 mV over potential and 10 coulombs/cm² charge density.

During the cathodic step, the lithium began to grow on a clean surface. It is suggested that the improvement in the electode properties is directly linked to the presence of microcavities generated at the electrode surface during the initial anodic step. Moreover, the incorporation of lithium into the Li/Li₃N anode during subsequent cathodic steps would take place through these microcavities. However, the dimension of the cavities only ensures the passage of small molecules such as lithium while bulkier solvent molecules are not able to penetrate into the cavities. Based on this model, the first anodic polarization playes a determinant role in the quality of the electrode's properties, and generation of cavities which permit the passage of lithium ions alone and not the solvent or solute molecules. As part of this model, it is further contemplated that lithium nitride in addition to acting as a host species may also promote lithium ion conductivity within the anode. In addition, preliminary lithium NMR studies indicate complete delocalization of lithium electrons which averages out and lowers the total lithium reactivity. It is believed that a combination of all these effects results in improved cycle and longer shelf life as observed in the studies of the Li/Li₃N electrode.

## Claims

1. A rechargeable electrochemical cell comprising:
(a) an anode comprising a solid solution of lithium metal and lithium nitride, wherein the proportion of nitrogen in said solution is in the range of 1.12 to 20 mole percent;
(b) a cathode; and
(c) a non-aqueous, solid or polymeric ion conductor electrolyte or a solid and polymeric ion conductor combination electrolyte.

2. An electrochemical cell according to claim 1 where said electrolyte is a non-aqueous electrolyte comprising a solvent and a lithium salt dissolved therein.

3. An electrochemical cell according to claim 1 or 2, further comprising a porous separator.

4. An electrochemical cell according to claim 3 wherein said porous separator comprises polypropylene.

5. An electrochemical cell according to claim 3 wherein said porous separator comprises glass microfiber material that is porous and wettable by said electrolyte.

6. An electrochemical cell according to claim 2 wherein said lithium salt has an anion selected from the group consisting of halide ions, hexafluorometallate ions, tetrafluorometallate ions, perchlorate ions, sulfonate ions, borate ions, thiocyanate ions, aluminate ions, closoborane ions and acetate ions and derivatives thereof.

7. An electrochemical cell according to claim 2 or 6 wherein said solvent is an organic solvent selected from the group consisting of ethers, dioxolanes, furans, glymes, glycol sulfites, sulfolanes and carbonates.

8. An electrochemical cell according to any preceding claim wherein the cathode active material comprises a chalcogen or chalcogenide compound of a transition metal.

9. An electrochemical cell according to any preceding claim wherein said cathode comprises a substance selected from the group consisting of a halogen, a halide, a metal oxide, a sulphide, a selenide, an oxyhalide, sulfur dioxide and carbon.

10. An electrochemical cell according to claim 2 wherein said electrolyte comprises a conductive lithium salt and an inorganic solvent selected from the group consisting of sulfur dioxide, thionyl chloride and sulfuryl chloride.

11. An electrochemical cell according to any preceding claim wherein said anode further comprises a plastic macromolecular material with ionic conduction.

12. An electrochemical cell according to any preceding claim wherein said anode further comprises carbon.

13. An electrochemical cell according to claim 1 wherein said electrolyte is a solid electrolyte.

14. An electrochemical cell according to claim 13 wherein said electrolyte comprises a polymeric ionic conductor.

15. An anode for use in a lithium-based rechargeable electrochemical cell comprising a solid solution of lithium metal and lithium nitride, wherein the proportion of nitrogen in said solution is in the range of 1.12 to 20 mole percent, and wherein said anode is in the form of a foil.

## Patentansprüche

1. Eine wiederaufladbare elektrochemische Zelle mit:
(a) einer Anode mit einer festen Lösung von metallischem Lithium und Lithium-Nitrid, wobei der Stickstoffanteil in der Lösung im Bereich von 1,12 bis 20 Mol % liegt;
(b) einer Kathode; und
(c) mit einem Elektrolyten und/oder einem nichtwäßrigen und/oder einem festen und/oder einem polymerischen Ionenleiter.

2. Eine elektrochemische Zelle nach Anspruch 1, dadurch gekennzeichnet, daß der Elektrolyt ein nichtwäßriger Elektrolyt mit einem Lösungsmittel und einem darin gelösten Lithiumsalz ist.

3. Eine elektrochemische Zelle nach Anspruch 1 oder 2, dadurch gekennzeichnet, daß sie einen porösen Separator aufweist.

4. Eine elektrochemische Zelle nach Anspruch 3, dadurch gekennzeichnet, daß der poröse Separator Polypropylen enthält.

5. Eine elektrochemische Zelle nach Anspruch 3, dadurch gekennzeichnet, daß der poröse Separator poröses Glas-Mikrofasermaterial enthält, das durch den Elektrolyten benetzbar ist.

6. Eine elektrochemische Zelle nach Anspruch 2, dadurch gekennzeichnet, daß das Lithiumsalz ein Anion aufweist, das einer Gruppe entstammt, die besteht aus Halideionen, Hexafluorometallationen, Tetrafluorometallationen, Perchlorationen, Sulfonationen, Borationen, Thiocyanationen, Aluminationen, Closoboranionen, Acetationen und Derivaten der genannten Ionen.

7. Eine elektrochemische Zelle, nach Anspruch 2 oder 6, dadurch gekennzeichnet, daß das Lösungsmittel ein organisches Lösungsmittel ist, das einer Gruppe entstammt, die besteht aus Ethern, Dioxolanen, Furanen, Glymen, Glycolsulfiten, Sulfolanen und Karbonaten.

8. Eine elektrochemische Zelle, nach einem der vorhergehenden Ansprüche, dadurch gekennzeichnet, daß das aktive Kathodenmaterial eine Chalkogen- oder Chalkogenidverbindung eines Übergangsmetalls enthält.

9. Eine elektrochemische Zelle, nach einem der vorhergehenden Ansprüche, dadurch gekennzeichnet, daß die Kathode einen Stoff enthält, der einer Gruppe entstammt, die besteht aus einem Halogen, einem Halid, einem Metalloxid, einem Sulfid, einem Selenid, einem Oxyhalid, Schwefeldioxid und Kohlenstoff.

10. Eine elektrochemische Zelle nach Anspruch 2, dadurch gekennzeichnet, daß der Elektrolyt ein leitendes Lithiumsalz enthält sowie ein anorganisches Lösungsmittel, das einer Gruppe entstammt, die besteht aus Schwefeldioxid, Thionylchlorid und Sulfurylchlorid.

11. Eine elektrochemische Zelle nach einem der vorhergehenden Ansprüche, dadurch gekennzeichnet, daß die Anode einen plastischen makromolekularen Stoff mit Ionenleitung enthält.

12. Eine elektrochemische Zelle nach einem der vorhergehenden Ansprüche, dadurch gekennzeichnet, daß die Anode Kohlenstoff enthält.

13. Eine elektrochemische Zelle nach Anspruch 1, dadurch gekennzeichnet, daß der Elektrolyt ein fester Elektrolyt ist.

14. Eine elektrochemische Zelle nach Anspruch 13, dadurch gekennzeichnet, daß der Elektrolyt einen polymerischen Ionenleiter enthält.

15. Eine Anode zur Verwendung in einer wiederaufladbaren elektrochemischen Zelle auf Lithiumbasis mit einer festen Lösung aus metallischem Lithium und Lithiumnitrid, wobei der Stickstoffanteil in der Lösung in dem Bereich von 1,12 bis 20 Mol % liegt und wobei die Anode die Form einer Folie aufweist.

## Revendications

1. Cellule électrochimique rechargeable comprenant :
a) une anode comprenant une solution solide de lithium métallique et de nitrure de lithium, dans laquelle la proportion d'azote dans la solution se situe dans la plage de 1, 12 à 20 moles pour cent ,
b) une cathode et
c) un électrolyte conducteur d'ions non-aqueux, solide ou polymère, ou un électrolyte conducteur d'ions constitué d'une combinaison solide et polymère.

2. Cellule électrochimique selon la revendication 1, caractérisée en ce que l'électrolyte est un électrolyte non-aqueux comprenant un solvant et un sel de lithium dissous dans celui-ci.

3. Cellule électrochimique selon la revendication 1 ou 2, caractérisée en ce qu'elle comprend en outre un séparateur poreux.

4. Cellule électrochimique selon la revendication 3, caractérisée en ce que le séparateur poreux comprend du polypropylène.

5. Cellule électrochimique selon la revendication 3, caractérisée en ce que le séparateur poreux comprend un matériau en micro-fibres de verre qui est poreux et mouillable par l'électrolyte.

6. Cellule électrochimique selon la revendication 2, caractérisée en ce que le sel de lithium comporte un anion choisi dans le groupe comprenant des ions halogénure, des ions hexafluorométallate, des ions tétrafluorometallate, des ions perchlorate, des ions sulfonate, des ions borate, des ions thiocyanate, des ions aluminate, des ions closoborane, des ions acétate et des dérivés de ceux-ci.

7. Cellule électrochimique selon la revendication 2 ou 6, caractérisée en ce que le solvant est un solvant organique choisi dans le groupe comprenant des éthers, des dioxolanes, des furannes, des glymes, des sulfites de glycol, des sulfolanes et des carbonates.

8. Cellule électrochimique selon l'une quelconque des revendications précédentes, caractérisée en ce que le matériau actif de la cathode comprend un composé chalcogène ou chalcogénure d'un métal de transition.

9. Cellule électrochimique selon l'une quelconque des revendications précédentes, caractérisée en ce que la cathode comprend une substance choisie dans le groupe comprenant un halogène, un halogénure, un oxyde métallique, un sulfure, un séléniure, un oxyhalogénure, le dioxyde de soufre et le carbone.

10. Cellule électrochimique selon la revendication 2, caractérisée en ce que l'électrolyte comprend un sel de lithium conducteur et un solvant inorganique choisi dans le groupe comprenant le dioxyde de soufre, le chlorure de thionyle et le chlorure de sulfuryle.

11. Cellule électrochimique selon l'une quelconque des revendications précédentes, caractérisée en ce que l'anode comprend en outre une matière plastique macromoléculaire à conduction ionique.

12. Cellule électrochimique selon l'une quelconque des revendications précédentes, caractérisée en ce que l'anode comprend en outre du carbone.

13. Cellule électrochimique selon la revendication 1, caractérisée en ce que l'électrolyte est un électrolyte solide.

14. Cellule électrochimique selon la revendication 13, caractérisée en ce que l'électrolyte comprend un conducteur ionique polymère.

15. Anode destinée à être utilisée dans une cellule électrochimique rechargeable à base de lithium comprenant une solution solide de lithium métallique et de nitrure de lithium, caractérisée en ce que la proportion d'azote dans la solution se situe dans la plage de 1,12 à 20 moles pour cent, et en ce que l'anode se présente sous la forme d'une feuille.
